(19) 

Europäisches
Patentamt
European
Patent Office
Office européen
des brevets

(11)     EP 4 212 364 B1

(12)     EUROPEAN PATENT SPECIFICATION

(45) Date of publication and mention
of the grant of the patent:
**16.04.2025  Bulletin 2025/16**

(21) Application number: **22215146.6**

(22) Date of filing: **20.12.2022**

(51) International Patent Classification (IPC):
***B60C 19/00*** (2006.01)        ***B60C 15/06*** (2006.01)

(52) Cooperative Patent Classification (CPC):
**B60C 19/00; B60C 15/0607;** B60C 2015/061;
B60C 2200/06

(54) **HEAVY DUTY PNEUMATIC TIRE**

SCHWERLASTLUFTREIFEN

PNEUMATIQUE POUR POIDS LOURDS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **12.01.2022  JP 2022002961**

(43) Date of publication of application:
**19.07.2023  Bulletin 2023/29**

(73) Proprietor: **Sumitomo Rubber Industries, Ltd.
Kobe-shi, Hyogo 651-0072 (JP)**

(72) Inventor: **KANAYA, YOSHIKI
Kobe-shi, 651-0072 (JP)**

(74) Representative: **Manitz Finsterwald
Patent- und Rechtsanwaltspartnerschaft mbB
Martin-Greif-Strasse 1
80336 München (DE)**

(56) References cited:
EP-A1- 3 756 870        WO-A1-2021/039603
WO-A1-2021/166798       JP-A- 2016 049 920
JP-A- 2021 046 057       KR-B1- 101 059 589
US-A1- 2016 303 921

**Description**

BACKGROUND OF THE INVENTION

Field of the Invention

The present invention relates to a heavy duty pneumatic tire.

Background Art

In order to manage data regarding manufacturing management, customer information, running history, etc., of tires, incorporation of radio frequency identification (RFID) tags into tires has been proposed. Therefore, various studies have been conducted for the technology to incorporate an RFID tag into a tire (for example, Japanese Laid-Open Patent Publication No. 2015-223918). Further prior art tires are disclosed in JP 2021 046057 A; KR 101 059 589 B1; US 2016/303921 A1; JP 2016 049920 A; WO 2021/166798 A1; EP 3 756 870 A1; and WO 2021/039603 A1.

For heavy duty pneumatic tires which are mounted on vehicles such as trucks and buses, there are cases where an RFID tag is placed in a bead portion, not in a side portion, in consideration of breakage due to external damage.

In the case where an RFID tag is placed in a bead portion, the risk of breakage due to external damage can be reduced as compared to the case where an RFID tag is placed in a side portion. Meanwhile, the risk of breakage due to strain during load application may be increased depending on the position in the bead portion at which the RFID tag is placed.

Moreover, in the case of incorporating an RFID tag into a tire, the RFID tag may be covered with a covering rubber and placed in a bead portion. In this case, the durability of the bead portion against strain during load application may be decreased depending on the hardness of the covering rubber.

The present invention has been made in view of the above circumstances, and an object of the present invention is to provide a heavy duty pneumatic tire in which reduction of the risk of damage to an RFID tag is achieved while an effect on the durability of a bead portion is taken into consideration.

SUMMARY OF THE INVENTION

The above object is satisfied by claim 1, such a heavy duty pneumatic tire according to an aspect of the present invention includes:

a pair of beads each including a core and an apex located outward of the core in a radial direction;
a carcass extending on and between one bead and the other bead;
a pair of chafers each located outward of the bead in an axial direction; and
a tag assembly including an RFID tag and a covering rubber covering the RFID tag, wherein
the apex includes an inner apex located on the core side and an outer apex located outward of the inner apex in the radial direction,
a ratio of a complex elastic modulus of the inner apex to a complex elastic modulus of the outer apex is not less than 10 and not greater than 21, wherein said complex elastic modulus is measured using a viscoelasticity spectrometer according to the standards of JIS K6394,
the carcass includes at least one carcass ply,
the carcass ply includes a ply body extending between one core and the other core and a pair of turned-up portions each connected to the ply body and turned up around the core from an inner side toward an outer side in the axial direction,
an outer end of the inner apex is located outward of an end of the turned-up portion in the radial direction,
the tag assembly is located outward of the outer apex in the axial direction, and
a distance in the radial direction from a bead base line to the RFID tag is not less than 120% and not greater than 145% of a distance in the radial direction from the bead base line to the end of the turned-up portion.

Preferably, in the pneumatic tire, the tag assembly is located between the outer apex and the chafer in the axial direction.

Preferably, in the pneumatic tire, a distance in the radial direction from the bead base line to the outer end of the inner apex is not less than 110% and not greater than 180% of the distance in the radial direction from the bead base line to the end of the turned-up portion.

Preferably, in the pneumatic tire, the complex elastic modulus of the inner apex is not less than 50 MPa and not greater than 85 MPa.

Preferably, in the pneumatic tire, a ratio of a thickness of the RFID tag to a total thickness of the covering rubber is not less than 0.34 and not greater than 0.58.

Preferably, in the pneumatic tire, the total thickness of the covering rubber is not less than 2.1 mm and not greater than 3.5 mm.

Preferably, in the pneumatic tire, a complex elastic modulus of the covering rubber is lower than a complex elastic modulus of the chafer.

Preferably, in the pneumatic tire, the complex elastic modulus of the covering rubber is not less than 2 MPa and not greater than 8 MPa.

In the heavy duty pneumatic tire of the present invention, reduction of the risk of damage to the RFID tag is achieved while an effect on the durability of a bead portion is taken into consideration.

BRIEF DESCRIPTION OF THE DRAWINGS

FIG. 1 is a cross-sectional view showing a part of a heavy duty pneumatic tire according to an embodiment of the present invention;
FIG. 2 is an enlarged cross-sectional view showing a portion at a bead of the tire; and
FIG. 3 is a cross-sectional view showing a tag assembly.

DETAILED DESCRIPTION

Hereinafter, the present invention will be described in detail based on preferred embodiments with appropriate reference to the drawings.

In the present invention, a state where a tire is fitted on a normal rim, the internal pressure of the tire is adjusted to a normal internal pressure, and no load is applied to the tire is referred to as a normal state. In the present invention, unless otherwise specified, the dimensions and angles of each component of the tire are measured in the normal state.

The dimensions and angles of each component in a meridian cross-section of the tire, which cannot be measured in a state where the tire is fitted on the normal rim, are measured in a cross-section of the tire obtained by cutting the tire along a plane including a rotation axis, with the distance between right and left beads being made equal to the distance between the beads in the tire that is fitted on the normal rim.

The normal rim means a rim specified in a standard on which the tire is based. The "standard rim" in the JATMA standard, the "Design Rim" in the TRA standard, and the "Measuring Rim" in the ETRTO standard are normal rims.

The normal internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures.

A normal load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are normal loads.

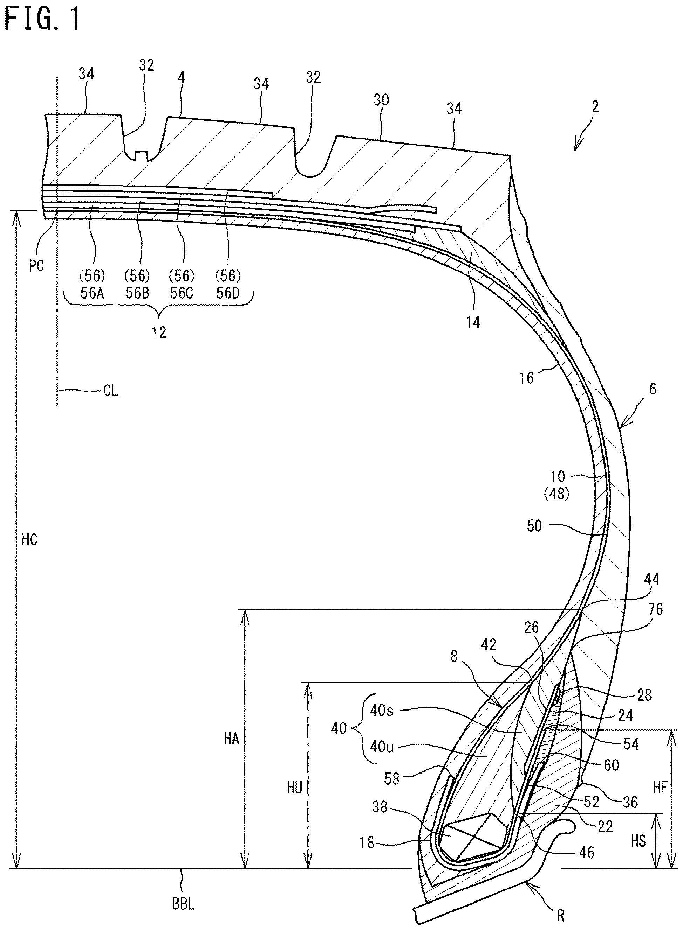

FIG. 1 shows a part of a heavy duty pneumatic tire 2 (hereinafter, sometimes referred to simply as "tire 2") according to an embodiment of the present invention. The tire 2 is mounted to a vehicle such as a truck and a bus. In FIG. 1, the tire 2 is fitted on a rim R (normal rim). The tire 2 shown in FIG. 1 is in a normal state.

FIG. 1 shows a part of a cross-section (hereinafter, referred to as meridian cross-section) of the tire 2 along a plane including the rotation axis of the tire 2. In FIG. 1, the right-left direction is the axial direction of the tire 2, and the up-down direction is the radial direction of the tire 2. The direction perpendicular to the surface of the drawing sheet of FIG. 1 is the circumferential direction of the tire 2. In FIG. 1, an alternate long and short dash line CL represents the equator plane of the tire 2.

The tire 2 includes a tread 4, a pair of sidewalls 6, a pair of beads 8, a carcass 10, a belt 12, a pair of cushion layers 14, an inner liner 16, a pair of steel reinforcing layers 18, a pair of chafers 22, a pair of interlayer strips 24, a pair of edge strips 26, and a tag assembly 28.

In FIG. 1, a solid line BBL is a bead base line extending in the axial direction. The bead base line BBL is a line that defines the rim diameter (see JATMA or the like) of the rim R (normal rim).

In FIG. 1, reference character PC indicates the point of intersection of the inner surface of the carcass 10 and the equator plane CL. A double-headed arrow HC indicates the distance in the radial direction from the bead base line BBL to the point of intersection PC. The distance HC in the radial direction is the cross-sectional height of the carcass 10.

The tread 4 comes into contact with a road surface at an outer surface 30 thereof, that is, a tread surface 30 thereof. The tread 4 has the tread surface 30 which comes into contact with a road surface. The tread 4 is formed from a crosslinked rubber. The tread 4 has a plurality of land portions 34 demarcated by grooves 32 continuously extending in the circumferential direction, that is, circumferential grooves 32.

Each sidewall 6 is connected to an end of the tread 4. The sidewall 6 extends radially inward from the end of the tread 4. An inner end 36 of the sidewall 6 is located on a side surface of the tire 2. The sidewall 6 is formed from a crosslinked rubber. In the tire 2, a complex elastic modulus E*s of the sidewall 6 is preferably not less than 2 MPa and not greater than 5 MPa.

In the tire 2, complex elastic moduli E* of components of the tire 2 such as the sidewall 6 are measured using a viscoelasticity spectrometer ("VES" manufactured by Iwamoto Seisakusho) under the following conditions according to the standards of JIS K6394. In this measurement, a test piece obtained by pressurizing and heating a rubber composition for each component is used.

$$\text{Initial strain} = 10\%$$

$$\text{Amplitude} = \pm 1\%$$

$$\text{Frequency} = 10 \text{ Hz}$$

$$\text{Deformation mode} = \text{tension}$$

$$\text{Measurement temperature} = 70^{\circ}\text{C}$$

Each bead 8 is located radially inward of the sidewall 6. The bead 8 includes a core 38 and an apex 40.

The core 38 extends in the circumferential direction. The core 38 includes a wound steel wire which is not shown. The core 38 has a substantially hexagonal cross-sectional shape.

The apex 40 is located outward of the core 38 in the radial direction. The apex 40 includes an inner apex 40u and an outer apex 40s. Each of the inner apex 40u and the outer apex 40s is formed from a crosslinked rubber.

The inner apex 40u is located on the core 38 side, and extends radially outward from the core 38. The outer apex 40s is located outward of the inner apex 40u in the radial direction. An outer end 42 of the inner apex 40u is located between an outer end 44 and an inner end 46 of the outer apex 40s in the radial direction.

In the cross-section shown in FIG. 1, the inner apex 40u is tapered radially outward. Forming the inner apex 40u in such a shape and locating the outer end 42 of the inner apex 40u on the radially outer side with respect to an inner end 58 of the steel reinforcing layer 18 are suitable for both reducing strain around the inner end 58 of the steel reinforcing layer 18 during load application and ensuring ride comfort of the tire 2.

The outer apex 40s has a maximum thickness around the outer end 42 of the inner apex 40u. The outer apex 40s is tapered radially outward from a portion having the maximum thickness, and is tapered radially inward from the portion having the maximum thickness. The outer end 44 of the outer apex 40s is also an outer end of the apex 40.

A complex elastic modulus E*b of the outer apex 40s is lower than a complex elastic modulus E*a of the inner apex 40u. In other words, the outer apex 40s is softer than the inner apex 40u.

The ratio of the complex elastic modulus E*a of the inner apex 40u to the complex elastic modulus E*b of the outer apex 40s is not less than 10 and not greater than 21. When the above ratio is maintained in this range, strain generated in a bead portion during load application can be reduced, so that a decrease in the durability of the bead portion can be avoided and deterioration of the ride comfort of the tire 2 can be avoided.

In the tire 2, it is sufficient that the complex elastic modulus E*a of the inner apex 40u is, for example, not less than 10 MPa and not greater than 85 MPa. The complex elastic modulus E*a of the inner apex 40u is preferably not less than 35 MPa and not greater than 85 MPa, and more preferably not less than 50 MPa and not greater than 85 MPa.

When the complex elastic modulus E*a of the inner apex 40u is set so as to be not less than 50 MPa and not greater than 85 MPa, strain is less likely to be generated in the bead portion during load application. As a result, the durability of the bead portion can be kept good.

In FIG. 1, a double-headed arrow HA indicates the distance in the radial direction from the bead base line BBL to the outer end 44 of the apex 40. The distance HA in the radial direction is the height in the radial direction of the apex 40. A double-headed arrow HU indicates the distance in the radial direction from the bead base line BBL to the outer end 42 of the inner apex 40u. The distance HU in the radial direction is the height in the radial direction of the inner apex 40u. A double-headed arrow HS indicates the distance in the radial direction from the bead base line BBL to the inner end 46 of the outer apex 40s.

In the tire 2, the ratio of the height HA in the radial direction of the apex 40 to the cross-sectional height HC of the carcass 10 is preferably not less than 30% and not greater than 50%. The ratio of the height HU in the radial direction of the inner apex 40u to the cross-sectional height HC of the carcass 10 is preferably not less than 15% and not greater than 35%. The ratio of the distance HS in the radial direction from the bead base line BBL to the inner end 46 of the outer apex 40s to the cross-sectional height HC of the carcass 10 is preferably not less than 5% and not greater than 15%.

The carcass 10 is located inward of the tread 4 and the sidewalls 6. The carcass 10 extends on and between one bead 8 and the other bead 8. The carcass 10 includes at least one carcass ply 48. The carcass 10 of the tire 2 is composed of one carcass ply 48.

The carcass ply 48 includes a large number of carcass cords aligned with each other, which are not shown. These carcass cords are covered with a topping rubber. The material of each carcass cord is steel. The carcass cords intersect the equator plane CL. In the tire 2, the carcass 10 has a radial structure. An angle of the carcass cords with respect to the equator plane CL is preferably not less than 70° and not greater than 90°.

In the tire 2, the carcass ply 48 is turned up around each core 38 from the inner side toward the outer side in the axial direction. The carcass ply 48 includes a ply body 50 which extends between one core 38 and the other core 38, and a pair of turned-up portions 52 each of which is connected to the ply body 50 and turned up around the core 38 from the inner side toward the outer side in the axial direction. An end 54 of the turned-up portion 52 is located inward of the outer end 42 of the inner apex 40u in the radial direction.

In FIG. 1, a double-headed arrow HF indicates the distance in the radial direction from the bead base line BBL to the end 54 of the turned-up portion 52. The distance HF in the radial direction is the height in the radial direction of the turned-up portion 52.

In the tire 2, the ratio of the height HF in the radial direction of the turned-up portion 52 to the cross-sectional height HC of the carcass 10 is preferably not less than 10% and not greater than 30%.

In the tire 2, the height HU in the radial direction of the inner apex 40u is preferably not less than 110% and not greater than 180% of the height HF in the radial direction of the turned-up portion 52. This case is suitable for ensuring good ride comfort and workability at the time of rim fitting while reducing strain generated in the bead portion during load application.

If the height HU in the radial direction of the inner apex 40u is less than 110% of the height HF in the radial direction of the turned-up portion 52, it is difficult to reduce strain generated in the bead portion during load application. On the other hand, if the height HU in the radial direction of the inner apex 40u exceeds 180% of the height HF in the radial direction of the turned-up portion 52, the flexibility of the entire side portion of the tire 2 may be deteriorated, resulting in poor ride comfort and workability at the time of rim fitting.

The belt 12 is located inward of the tread 4 in the radial direction. The belt 12 is located radially outward of the carcass 10. The belt 12 is stacked on the carcass 10.

The belt 12 includes a plurality of layers 56 stacked in the radial direction. The belt 12 of the tire 2 includes four layers 56. In the tire 2, the number of layers 56 included in the belt 12 is not particularly limited. The configuration of the belt 12 is determined as appropriate in consideration of the specifications of the tire 2.

Each layer 56 includes a large number of belt cords aligned with each other, which are not shown. Each belt cord is inclined relative to the equator plane CL. The material of each belt cord is steel.

In the tire 2, among the four layers 56, a second layer 56B located between a first layer 56A and a third layer 56C has a largest width in the axial direction. A fourth layer 56D located on the outermost side in the radial direction has a smallest width in the axial direction.

Each cushion layer 14 is located between the belt 12 and the carcass 10 at an end portion of the belt 12. The cushion layer 14 is formed from a crosslinked rubber.

The inner liner 16 is located inward of the carcass 10. The inner liner 16 forms an inner surface of the tire 2. The inner liner 16 is formed from a crosslinked rubber that has an excellent air blocking property.

Each steel reinforcing layer 18 is located in a portion at the bead 8. The steel reinforcing layer 18 is turned up around the core 38 from the inner side toward the outer side in the axial direction along the carcass ply 48. In the tire 2, the carcass ply 48 is located between the steel reinforcing layer 18 and the bead 8. The steel reinforcing layer 18 is in contact with the carcass ply 48.

The steel reinforcing layer 18 includes a large number of filler cords aligned with each other, which are not shown. In the steel reinforcing layer 18, the filler cords are covered with a topping rubber. The material of each filler cord is steel.

In the tire 2, one end 58 (hereinafter, inner end) of the steel reinforcing layer 18 is located between the outer end 42 of the inner apex 40u and the core 38 in the radial direction. When the inner end 58 of the steel reinforcing layer 18 is located at such a position, strain is less likely to be generated around the inner end 58 during load application. Another end 60 (hereinafter, outer end) of the steel reinforcing layer 18 is located between the end 54 of the turned-up portion 52 and the core 38 in the radial direction. As shown in FIG. 1, in the tire 2, the outer end 60 of the steel reinforcing layer 18 is located outward of the inner end 58 thereof in the radial direction. The carcass ply 48 is located between the steel reinforcing layer 18 and the core 38.

Each chafer 22 is located outward of the steel reinforcing layer 18 in the axial direction. The chafer 22 is located radially inward of the sidewall 6. An outer end 76 of the chafer 22 is located outward of the inner end 36 of the sidewall 6 in the radial direction. The boundary between the chafer 22 and the sidewall 6 extends between the outer end 76 of the chafer 22 and the inner end 36 of the sidewall 6. The chafer 22 comes into contact with the rim R.

The chafer 22 is formed from a crosslinked rubber. A complex elastic modulus E*c of the chafer 22 is preferably not less than 10 MPa and not greater than 15 MPa.

In the tire 2, the complex elastic modulus E*c of the chafer 22 is higher than the complex elastic modulus E*b of the outer apex 40s. In other words, the chafer 22 is harder than the outer apex 40s.

Each interlayer strip 24 is located between the outer apex 40s of the bead 8 and the chafer 22. The interlayer strip 24 covers the end 54 of the turned-up portion 52 and the outer end 60 of the steel reinforcing layer 18. The interlayer strip 24 is formed from a crosslinked rubber. A complex elastic modulus E*d of the interlayer strip 24 is preferably not less than 7 MPa and not greater than 12 MPa.

In the tire 2, the complex elastic modulus E*d of the interlayer strip 24 is higher than the complex elastic modulus E*b of the outer apex 40s. In other words, the interlayer strip 24 is harder than the outer apex 40s.

Each edge strip 26 is located between the outer apex 40s of the bead 8 and the interlayer strip 24. A portion at the end 54 of the turned-up portion 52 is in contact with the edge strip 26. As shown in FIG. 1, the end 54 of the turned-up portion 52 is interposed between the edge strip 26 and the interlayer strip 24. The edge strip 26 is formed from a crosslinked rubber. A complex elastic modulus E*f of the edge strip 26 is preferably not less than 7 MPa and not greater than 12 MPa. In the tire 2, the edge strip 26 is formed from the same material as that of the interlayer strip 24.

In the tire 2, the complex elastic modulus E*f of the edge strip 26 is higher than the complex elastic modulus E*b of the outer apex 40s. In other words, the edge strip 26 is harder than the outer apex 40s.

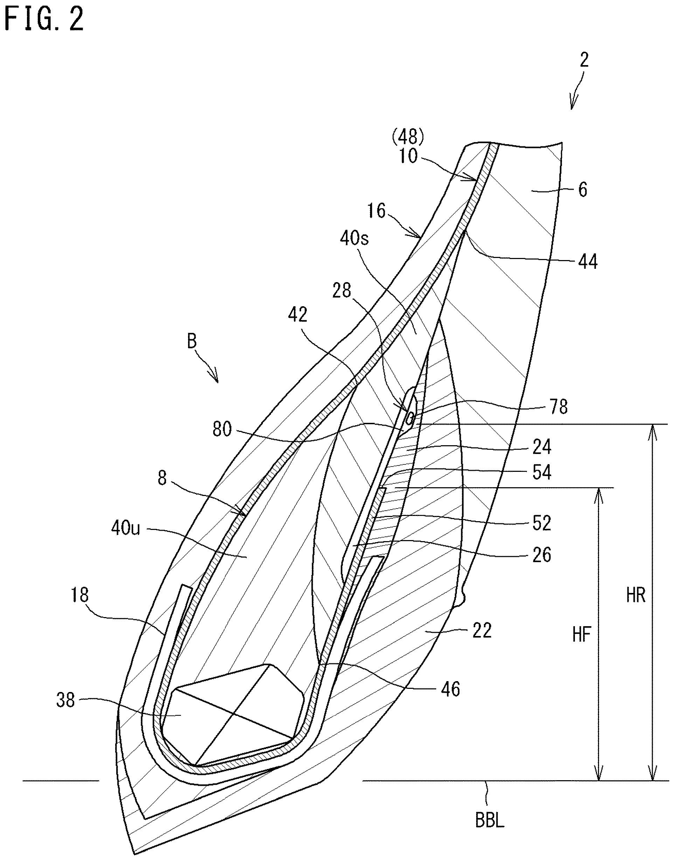

FIG. 2 shows the portion at the bead 8 (hereinafter, also referred to as bead portion B) of the tire 2 shown in FIG. 1. In FIG. 2, the right-left direction is the axial direction of the tire 2, and the up-down direction is the radial direction of the tire 2. The direction perpendicular to the surface of the drawing sheet of FIG. 2 is the circumferential direction of the tire 2.

In the tire 2, the tag assembly 28 is provided in one bead portion B. The tag assembly 28 may be provided in each of both bead portions B. In this case, the tire 2 includes a pair of the tag assemblies 28.

The tag assembly 28 includes an RFID tag 78. Although not described in detail, the RFID tag 78 is a small and lightweight electronic component that is composed of an antenna and a semiconductor obtained by making a transmitter/receiver circuit, a control circuit, a memory, etc., into a chip. Upon receiving interrogation radio waves, the RFID tag 78 uses the radio waves as electrical energy and transmits various data in the memory as response radio waves. The RFID tag 78 is a type of passive radio frequency identification transponder.

As shown in FIG. 2, in the tire 2, the entirety of the RFID tag 78 is covered with a covering rubber 80. The tag assembly 28 includes the RFID tag 78 and the covering rubber 80 covering the RFID tag 78. The covering rubber 80 is formed from a crosslinked rubber.

In the tire 2, the tag assembly 28 is located between the outer apex 40s and the chafer 22 in the axial direction. The tag assembly 28 is in contact with the edge strip 26 which is located axially outward of the outer apex 40s. The tag assembly 28 is in contact with the edge strip 26 from the axially outer side of the edge strip 26. In addition, the RFID tag 78 included in the tag assembly 28 is located outward of the end 54 of the turned-up portion 52 in the radial direction.

In the tire according to the embodiment of the present invention, it is sufficient that the above tag assembly is located outward of the outer apex in the axial direction, and the tag assembly may be located outward of the chafer in the radial direction.

In FIG. 2, a double-headed arrow HR indicates the distance in the radial direction from the bead base line BBL to the radially innermost position of the RFID tag 78. The distance HR in the radial direction is the installation height in the radial direction of the RFID tag 78. Similar to FIG. 1, a double-headed arrow HF indicates the height in the radial direction of the turned-up portion 52.

The position in the radial direction of the tag assembly 28 in the tire 2 is a position at which the installation height HR in the radial direction of the RFID tag 78 is not less than 120% and not greater than 145% of the height HF in the radial direction of the turned-up portion 52.

If the installation height HR in the radial direction of the RFID tag 78 is less than 120% of the height HF in the radial direction of the turned-up portion 52, breakage is likely to occur around the end 54 of the turned-up portion 52, so that the bead portion B may have poor durability. In addition, since the steel carcass cords are close to the RFID tag 78, the RFID tag 78 may have poor readability of electronic information.

On the other hand, if the installation height HR in the radial direction of the RFID tag 78 exceeds 145% of the height HF in the radial direction of the turned-up portion 52, the position of the RFID tag 78 corresponds to a position where strain is likely to be generated during load application (during tire running), and the RFID tag 78 is likely to be broken during load application.

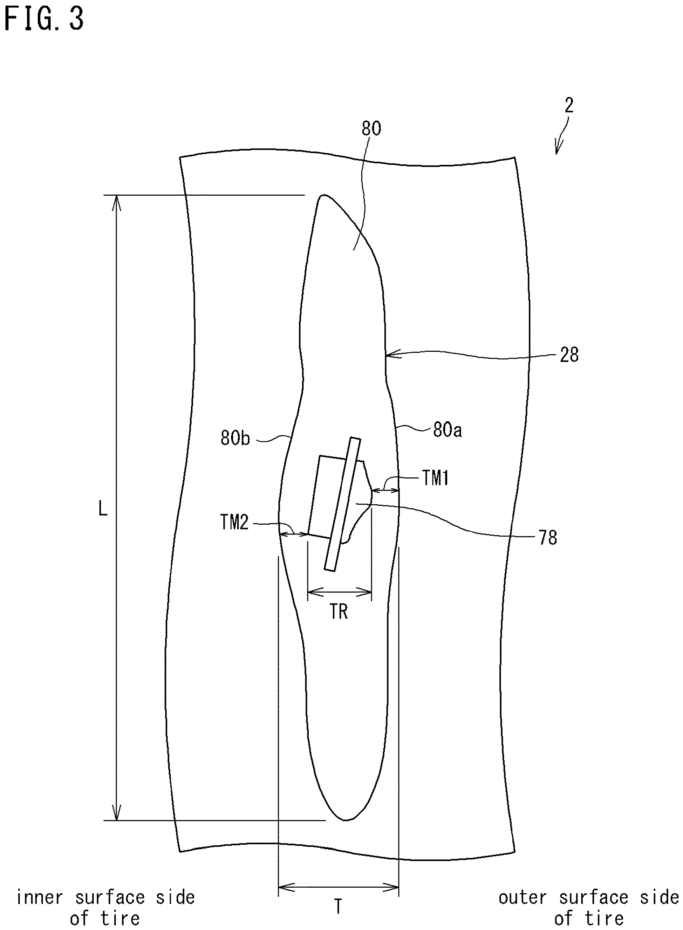

FIG. 3 shows the tag assembly 28 in FIG. 2. In FIG. 3, a double-headed arrow L indicates the length of the tag assembly 28. A double-headed arrow T is the thickness of the tag assembly 28. In FIG. 3, the left side is the inner surface side of the tire 2, and the right side is the outer surface side of the tire 2. In FIG. 3, the upper side is the tread 4 side of the tire 2, and the lower side is the bead 8 side of the tire 2. Therefore, FIG. 3 shows a part of the meridian cross-section of the tire 2.

The size of the tag assembly 28 is set as appropriate on the basis of the RFID tag 78, and the length L of the tag assembly 28 is generally set in the range of not less than 10 mm and not greater than 20 mm. The thickness T of the tag assembly 28 is generally set in the range of not less than 2 mm and not greater than 4 mm.

The tire 2 is produced as follows.

A production method for the tire 2 includes

(1) a step of preparing a green tire, and
(2) a step of pressurizing and heating the green tire.

In the production method for the tire 2, first, an unvulcanized tire 2 (hereinafter, also referred to as green tire) is prepared (step (1)).

In the production method for the tire 2, components such as the tread 4 are combined on a forming machine which is not shown. At least, the chafers 22, the inner liner 16, the steel reinforcing layers 18, the interlayer strips 24, and the carcass ply 48 are wound in an overlapping manner to form a tubular formed body. The beads 8 are fitted to the tubular formed body. Then, the edge strips 26 are attached to the beads 8. The beads 8 may be fitted to the tubular formed body after the edge strips 26 are attached to the beads 8.

The RFID tag 78 is sandwiched between two sheets formed from an unvulcanized rubber composition for the covering rubber 80, to prepare an unvulcanized tag assembly 28. The unvulcanized tag assembly 28 is attached to a predetermined position on the edge strip 26 and/or the outer apex 40s of the bead 8.

A portion that is outward of each core 38 is turned up around the core 38, and a portion between the right and left cores 38 is shaped into a toroid shape while the distance between the right and left cores 38 is decreased. Accordingly, the carcass ply 48 is turned up around each core 38. The belt 12, the tread 4, etc., are attached to obtain a green tire.

The prepared green tire has the same configuration as the tire 2 shown in FIG. 1, except for the point that the green tire is in an unvulcanized state and has not been shaped.

The green tire is pressurized and heated (step (2)). In the production method for the tire 2, the green tire is placed into a mold of a vulcanizing machine which is not shown. The green tire is pressurized and heated in the mold. Thus, the tire 2 is obtained.

In the tire 2, the RFID tag 78 is placed at a portion that is between the outer apex 40s and the chafer 22 and is radially outward of the end 54 of the turned-up portion 52. Specifically, the RFID tag 78 is installed at a position at which the installation height HR in the radial direction of the RFID tag 78 is not less than 120% and not greater than 145% of the height HF in the radial direction of the turned-up portion 52. At this position, strain generated when a load is applied is small. In the tire 2, the RFID tag 78 is placed at a portion where strain is small. In the tire 2, the RFID tag 78 is less likely to be damaged.

In the tire 2, a complex elastic modulus E*g of the covering rubber 80 is preferably not less than 2 MPa and not greater than 8 MPa.

If the complex elastic modulus E*g of the covering rubber 80 is less than 2 MPa, the covering rubber 80 is excessively deformed during load application, so that the risk of damage to the RFID tag 78 is increased. On the other hand, if the complex elastic modulus E*g of the covering rubber 80 exceeds 8 MPa, breakage is likely to occur around the end 54 of the turned-up portion 52, so that the bead portion B may have poor durability.

Preferably, the complex elastic modulus E*g of the covering rubber 80 is lower than the complex elastic modulus E*c of the chafer 22. In other words, the covering rubber 80 is softer than the chafer 22.

In the tire 2, reduction of the risk of damage to the RFID tag 78 is achieved while an effect on the durability of the bead portion B is taken into consideration.

In the tire 2, as already described, the tag assembly 28 is installed at the position at which the installation height HR in the radial direction of the RFID tag 78 is not less than 120% and not greater than 145% of the height HF in the radial direction of the turned-up portion 52. In addition, the height HU in the radial direction of the inner apex 40u is preferably not less than 110% and not greater than 180% of the height HF in the radial direction of the turned-up portion 52.

As for the installation height HR in the radial direction of the RFID tag 78 and the height HU in the radial direction of the inner apex 40u, the installation height HR in the radial direction of the RFID tag 78 may be higher, or the height HU in the radial direction of the inner apex 40u may be higher, but the height HU in the radial direction of the inner apex 40u is preferably higher. This case is more suitable for reducing the risk of breakage of the RFID tag 78.

In the tire 2, the interlayer strip 24 preferably covers the end 54 of the turned-up portion 52 in the axial direction, and the interlayer strip 24 is preferably located outward of the RFID tag 78 in the axial direction. In this case, the complex elastic modulus E*d of the interlayer strip 24 is preferably lower than the complex elastic modulus E*c of the chafer 22 and higher than the complex elastic modulus E*g of the covering rubber 80. In this case, the interlayer strip 24 contributes to protection of the RFID tag 78, so that the risk of damage to the RFID tag 78 is reduced.

In the tire 2, from the viewpoint of reducing the risk of damage to the RFID tag 78, the ratio (E*d/E*c) of the complex elastic modulus E*d of the interlayer strip 24 to the complex elastic modulus E*c of the chafer 22 is preferably not less than 0.6 and preferably not greater than 0.9. From the same viewpoint, the ratio (E*d/E*g) of the complex elastic modulus E*d of the interlayer strip 24 to the complex elastic modulus E*g of the covering rubber 80 is preferably not less than 1.9 and preferably not greater than 2.2.

In FIG. 3, double-headed arrows TM1 and TM2 are thicknesses of the covering rubber 80. The thicknesses TM1 and TM2 are represented as smallest thicknesses between the RFID tag 78 and the surface of the covering rubber 80 in the meridian cross-section of the tire 2 at the tag assembly 28. The thickness TM1 is the smallest distance in the tire axial direction between the RFID tag 78 and a surface 80a on the tire outer surface side of the covering rubber 80. The thickness TM2 is the smallest distance in the tire axial direction between the RFID tag 78 and a surface 80b on the tire inner surface side of the covering rubber 80.

In the tire 2, the sum of the thickness TM1 and the thickness TM2 is defined as a total thickness of the covering rubber 80.

In the tire 2, the ratio (TR/[TM1 + TM2]) of a thickness TR of the RFID tag 78 to the total thickness (TM1 + TM2) of the covering rubber 80 is preferably not less than 0.34 and not greater than 0.58. When the above ratio (TR/[TM1 + TM2]) satisfies the above range, good readability of electronic information and good durability of the bead portion B can be ensured.

In the tire 2, the thickness TR of the RFID tag 78 is the maximum thickness in the axial direction of the tire 2.

The thickness TR of the RFID tag 78 in the tire 2 is, for example, about 1.2 mm.

In the tire 2, the total thickness (TM1 + TM2) of the covering rubber 80 is preferably not less than 2.1 mm and not greater than 3.5 mm.

If the total thickness of the covering rubber 80 is less than 2.1 mm, the insulation properties by the covering rubber 80 are decreased, so that the readability of electronic information may be deteriorated. On the other hand, if the total thickness of the covering rubber 80 exceeds 3.5 mm, the thickness of the covering rubber 80 is excessively large and presses the outer apex 40s toward the inner side, so that a desired apex thickness cannot be ensured and the durability of the bead portion B may be deteriorated.

In the tire 2, from the viewpoint of ensuring insulation properties and being able to read electronic information in a satisfactory manner, each of the thicknesses TM1 and TM2 of the covering rubber 80 is preferably not less than 1.05 mm and not greater than 1.75 mm.

The thicknesses TM1 and TM2 of the covering rubber 80 are normally substantially equal to each other, but do not necessarily have to be substantially equal to each other.

As is obvious from the above description, in the heavy duty pneumatic tire 2 of the present invention, reduction of the risk of damage to the RFID tag 78 is achieved while an effect on the durability of the bead portion B is taken into consideration.

The embodiments disclosed above are merely illustrative in all aspects and are not restrictive. The technical scope of the present disclosure is not limited to the above-described embodiments, and all changes which come within the range of equivalency of the configurations recited in the claims are therefore intended to be included therein.

EXAMPLES

Hereinafter, the present invention will be described in further detail by means of examples, etc., but the present invention is not limited to these examples.

[Example 1]

A heavy duty pneumatic tire (tire size = 315/80R22.5) having the structure shown in FIG. 1 and having specifications shown in Table 1 below was obtained.

In Example 1:

the complex elastic modulus E*a of the inner apex 40u was 68 MPa, the complex elastic modulus E*b of the outer apex 40s was 4.5 MPa, and the ratio of the complex elastic modulus E*a of the inner apex to the complex elastic modulus E*b of the outer apex was 15.1;

the installation height HR in the radial direction of the RFID tag 78 was 125% of the height HF in the radial direction of the turned-up portion 52;

the thickness of the RFID tag 78 was 1.2 mm;

the height HU in the radial direction of the inner apex 40u was 135% of the height HF in the radial direction of the turned-up portion 52;

the total thickness of the covering rubber was 2.5 mm; and

the complex elastic modulus E*g of the covering rubber was 3.5 MPa.

[Example 2]

A tire of Example 2 was obtained in the same manner as Example 1, except that the total thickness of the covering rubber was changed as shown in Table 1.

[Examples 3 and 4]

Tires of Examples 3 and 4 were obtained in the same manner as Example 1, except that the complex elastic modulus E*g of the covering rubber was changed as shown in Table 1.

[Example 5]

A tire of Example 5 was obtained in the same manner as Example 1, except that the complex elastic modulus E*a of the inner apex 40u and the complex elastic modulus E*b of the outer apex 40s were changed as shown in Table 1.

[Examples 6 and 7]

Tires of Examples 6 and 7 were obtained in the same manner as Example 1, except that the ratio (distance HU/distance HF (%)) of the height HU in the radial direction of the inner apex 40u to the height HF in the radial direction of the turned-up portion 52 was changed as shown in Table 1.

[Example 8]

A tire of Example 8 was obtained in the same manner as Example 1, except that the ratio (distance HR/distance HF (%)) of the installation height HR in the radial direction of the RFID tag 78 to the height HF in the radial direction of the turned-up portion 52 was changed as shown in Table 1.

[Comparative Examples 1 and 2]

Tires of Comparative Examples 1 and 2 were obtained in the same manner as Example 1, except that the ratio (distance HR/distance HF (%)) of the installation height HR in the radial direction of the RFID tag 78 to the height HF in the radial direction of the turned-up portion 52 was changed as shown in Table 2.

[Comparative Examples 3 and 4]

Tires of Comparative Examples 3 and 4 were obtained in the same manner as Example 1, except that the complex elastic modulus E*b of the outer apex 40s or the complex elastic modulus E*a of the inner apex 40u was changed as shown in Table 2.
In the tire of Comparative Example 3, the ratio of the complex elastic modulus E*a of the inner apex 40u to the complex elastic modulus E*b of the outer apex 40s was 25.0.
In the tire of Comparative Example 4, the ratio of the complex elastic modulus E*a of the inner apex 40u to the complex elastic modulus E*b of the outer apex 40s was 8.0.

[Durability]

A test tire was fitted onto a rim (size = 22.5×9.00) and inflated with air to adjust the internal pressure of the tire to a normal internal pressure. The tire was heated in an atmosphere of dry air adjusted to 110°C for 3 days. The tire was cooled to room temperature, and then mounted to a drum tester. A load of 36.77 kN was applied to the tire, and the tire was caused to run on a drum (radius = 1.7 m) at a speed of 80 km/h. The running time was measured until the bead became damaged. The results are shown as indexes in Tables 1 and 2 below. A higher value indicates that the durability is better.

[Reading Performance]

A test tire was fitted onto a rim (size = 22.5×9.00) and inflated with air to adjust the internal pressure of the tire to a normal internal pressure. Whether radio waves emitted from the RFID tag were received was measured using a reading device. The results are shown in Tables 1 and 2 below. The results are indicated as "∘" for the case where radio waves were successfully received, and indicated as "×" for the case where radio waves were not successfully received.

[Safety Degree]

A test tire was fitted onto a rim (size = 22.5×9.00) and inflated with air to adjust the internal pressure of the tire to a normal internal pressure. The tire was mounted to a drum tester. A load of 36.77 kN was applied to the tire, and the tire was caused to run on a drum (radius = 1.7 m) at a speed of 80 km/h. After running for 100 thousand km, the tire was disassembled and checked for damage to the RFID tag. 100 tires were evaluated, and the rate of damage to the RFID tag was obtained. The reciprocal of the rate of damage was calculated and used as an index of safety degree. The results are shown as indexes in Tables 1 and 2 below. A higher value indicates that the risk of damage to the RFID tag is lower.

[Ride Comfort]

Test tires were each fitted onto a rim (size = 22.5×9.00) and inflated with air to adjust the internal pressure of the tire to a normal internal pressure. The tires were attached to all the wheels of a test vehicle (one occupant), and the vehicle was driven on a test course having a dry asphalt road surface. The driver made evaluations (sensory evaluations) for ride comfort at that time. The results are shown as indexes in Tables 1 and 2 below. A higher value indicates that the ride comfort is better.

[Table 1]

|  | Example 1 | Example 2 | Example 3 | Example 4 | Example 5 | Example 6 | Example 7 | Example 8 |
|---|---|---|---|---|---|---|---|---|
| Complex elastic modulus E*a (MPa) | 68 | 68 | 68 | 68 | 40 | 68 | 68 | 68 |
| Complex elastic modulus E*b (MPa) | 4.5 | 4.5 | 4.5 | 4.5 | 2.6 | 4.5 | 4.5 | 4.5 |
| E*a/E*b | 15.1 | 15.1 | 15.1 | 15.1 | 15.1 | 15.1 | 15.1 | 15.1 |
| Distance HR/distance HF (%) | 125 | 125 | 125 | 125 | 125 | 125 | 125 | 140 |
| Distance HU/distance HF (%) | 135 | 135 | 135 | 135 | 135 | 108 | 190 | 135 |
| Total thickness of covering rubber (mm) | 2.5 | 4.0 | 2.5 | 2.5 | 2.5 | 2.5 | 2.5 | 2.5 |
| Complex elastic modulus E*g (MPa) | 3.5 | 3.5 | 9.4 | 1.5 | 3.5 | 3.5 | 3.5 | 3.5 |
| Durability | 80 | 55 | 60 | 60 | 80 | 55 | 85 | 85 |
| Reading performance | ○ | ○ | ○ | ○ | ○ | ○ | ○ | ○ |
| Safety degree | 70 | 75 | 90 | 65 | 55 | 55 | 80 | 60 |
| Ride comfort | 60 | 60 | 60 | 60 | 60 | 65 | 50 | 60 |

[Table 2]

|  | Comparative Example 1 | Comparative Example 2 | Comparative Example 3 | Comparative Example 4 |
|---|---|---|---|---|
| Complex elastic modulus E*a (MPa) | 68 | 68 | 68 | 20 |

(continued)

| | Comparative Example 1 | Comparative Example 2 | Comparative Example 3 | Comparative Example 4 |
|---|---|---|---|---|
| Complex elastic modulus E*b (MPa) | 4.5 | 4.5 | 2.7 | 2.5 |
| E*a/E*b | 15.1 | 15.1 | 25.0 | 8.0 |
| Distance HR/distance HF (%) | 150 | 118 | 125 | 125 |
| Distance HU/distance HF (%) | 135 | 135 | 135 | 135 |
| Total thickness of covering rubber (mm) | 2.5 | 2.5 | 2.5 | 2.5 |
| Complex elastic modulus E*g (MPa) | 3.5 | 3.5 | 3.5 | 3.5 |
| Durability | 85 | 50 | 55 | 50 |
| Reading performance | ○ | ○ | ○ | ○ |
| Safety degree | 50 | 60 | 60 | 50 |
| Ride comfort | 60 | 60 | 65 | 70 |

As shown in Tables 1 and 2, each Example has good durability and has low risk of damage to the RFID tag. From the evaluation results, advantages of the present invention are clear.

The above-described technology for incorporating an RFID tag into a bead portion is also applicable to various tires.

**Claims**

1.  A heavy duty pneumatic tire (2) comprising:

  a pair of beads (8) each including a core (38) and an apex (40) located outward of the core (38) in a radial direction;
  a carcass (10) extending on and between one bead (8) and the other bead (8);
  a pair of chafers (22) each located outward of the bead (8) in an axial direction; and
  a tag assembly (28) including an RFID tag (78) and a covering rubber (80) covering the RFID tag (78), wherein
  the apex (40) includes an inner apex (40u) located on the core (38) side and an outer apex (40s) located outward of the inner apex (40u) in the radial direction,
  a ratio of a complex elastic modulus (E*a) of the inner apex (40u) to a complex elastic modulus (E*b) of the outer apex (40s) is not less than 10 and not greater than 21, wherein said complex elastic modulus is measured using a viscoelasticity spectrometer according to the standards of JIS K6394, in which measurement a test piece obtained by pressurizing and heating a rubber composition for each component is used, under the following conditions: initial strain = 10%, amplitude = $\pm 1\%$, frequency = 10Hz, deformation mode = tension, measurement temperature = 70°C;
  the carcass (10) includes at least one carcass ply (48),
  the carcass ply (48) includes a ply body (50) extending between one core (38) and the other core (38) and a pair of turned-up portions (52) each connected to the ply body (50) and turned up around the core (38) from an inner side toward an outer side in the axial direction,
  an outer end (42) of the inner apex (40u) is located outward of an end (54) of the turned-up portion (52) in the radial direction,
  the tag assembly (28) is located outward of the outer apex (40s) in the axial direction, and the tire being **characterized in that**
  a distance (HR) in the radial direction from a bead base line (BBL) to the RFID tag (78) is not less than 120% and not greater than 145% of a distance (HF) in the radial direction from the bead base line (BBL) to the end (54) of the turned-up portion (52), and **in that** a ratio (TR/[TM1 + TM2]) of a thickness (TR) of the RFID tag (78) to a total thickness (TM1 + TM2) of the covering rubber (80) is not less than 0.34 and not greater than 0.58.

2.  The heavy duty pneumatic tire (2) according to claim 1, wherein the tag assembly (28) is located between the outer apex (40s) and the chafer (22) in the axial direction.

3.  The heavy duty pneumatic tire (2) according to claim 1 or 2, wherein a distance (HU) in the radial direction from the bead base line (BBL) to the outer end (42) of the inner apex (40u) is not less than 110% and not greater than 180% of the distance (HF) in the radial direction from the bead base line (BBL) to the end (54) of the turned-up portion (52).

4. The heavy duty pneumatic tire (2) according to any one of claims 1 to 3, wherein the complex elastic modulus (E*a) of the inner apex (40u) is not less than 50 MPa and not greater than 85 MPa.

5. The heavy duty pneumatic tire (2) according to any one of claims 1 to 4, wherein the total thickness (TM1 + TM2) of the covering rubber (80) is not less than 2.1 mm and not greater than 3.5 mm.

6. The heavy duty pneumatic tire (2) according to any one of claims 1 to 5, wherein a complex elastic modulus (E*g) of the covering rubber (80) is lower than a complex elastic modulus (E*c) of the chafer (22).

7. The heavy duty pneumatic tire (2) according to any one of claims 1 to 6, wherein the complex elastic modulus (E*g) of the covering rubber (80) is not less than 2 MPa and not greater than 8 MPa.

**Patentansprüche**

1. Schwerlastluftreifen (2), umfassend:

ein Paar Wülste (8), die jeweils einen Kern (38) und einen Kernreiter (40), der in einer radialen Richtung außen von dem Kern (38) angeordnet ist, umfassen;
eine Karkasse (10), die sich auf und zwischen einem Wulst (8) und dem anderen Wulst (8) erstreckt;
ein Paar Wulstschutzbänder (22), die jeweils in einer axialen Richtung außen von dem Wulst (8) angeordnet sind; und
eine Tag-Anordnung (28), die einen RFID-Tag (78) und einen Abdeckgummi (80), der den RFID-Tag (78) abdeckt, umfasst, wobei
der Kernreiter (40) einen inneren Kernreiter (40u), der auf der Seite des Kerns (38) angeordnet ist, und einen äußeren Kernreiter (40s), der in der radialen Richtung außen von dem inneren Kernreiter (40u) angeordnet ist, umfasst,
ein Verhältnis eines komplexen Elastizitätsmoduls (E*a) des inneren Kernreiters (40u) zu einem komplexen Elastizitätsmodul (E*b) des äußeren Kernreiters (40s) nicht kleiner als 10 und nicht größer als 21 ist, wobei der komplexe Elastizitätsmodul unter Verwendung eines Viskoelastizitätsspektrometers gemäß den Standards von JIS K6394 gemessen wird, wobei bei der Messung ein Teststück, das durch Druckbeaufschlagung und Erwärmen einer Gummizusammensetzung für jede Komponente erhalten wird, unter den folgenden Bedingungen verwendet wird: Anfangsdehnung = 10 %, Amplitude = ±1 %, Frequenz = 10 Hz, Verformungsmodus = Zug, Messtemperatur = 70 °C;
die Karkasse (10) mindestens eine Karkasslage (48) umfasst,
die Karkasslage (48) einen Lagenkörper (50), der sich zwischen einem Kern (38) und dem anderen Kern (38) erstreckt, und ein Paar Umschlagabschnitte (52), die jeweils mit dem Lagenkörper (50) verbunden sind und um den Kern (38) von einer Innenseite zu einer Außenseite in der axialen Richtung umgeschlagen sind, umfasst,
ein äußeres Ende (42) des inneren Kernreiters (40u) in der radialen Richtung außen von einem Ende (54) des Umschlagabschnitts (52) angeordnet ist,
die Tag-Anordnung (28) in der axialen Richtung außen von dem äußeren Kernreiter (40s) angeordnet ist und
der Reifen **dadurch gekennzeichnet ist, dass**
ein Abstand (HR) in der radialen Richtung von einer Wulstbasislinie (BBL) zu dem RFID-Tag (78) nicht kleiner als 120 % und nicht größer als 145 % eines Abstands (HF) in der radialen Richtung von der Wulstbasislinie (BBL) zu dem Ende (54) des Umschlagabschnitts (52) ist,
und dadurch, dass ein Verhältnis (TR/[TM1 + TM2]) einer Dicke (TR) des RFID-Tags (78) zu einer Gesamtdicke (TM1 + TM2) des Abdeckgummis (80) nicht kleiner als 0,34 und nicht größer als 0,58 ist.

2. Schwerlastluftreifen (2) nach Anspruch 1, wobei die Tag-Anordnung (28) in der axialen Richtung zwischen dem äußeren Kernreiter (40s) und dem Wulstschutzband (22) angeordnet ist.

3. Schwerlastluftreifen (2) nach Anspruch 1 oder 2, wobei ein Abstand (HU) in der radialen Richtung von der Wulstbasislinie (BBL) zu dem äußeren Ende (42) des inneren Kernreiters (40u) nicht kleiner als 110 % und nicht größer als 180 % des Abstands (HF) in der radialen Richtung von der Wulstbasislinie (BBL) zu dem Ende (54) des Umschlagabschnitts (52) ist.

**4.** Schwerlastluftreifen (2) nach einem der Ansprüche 1 bis 3, wobei der komplexe Elastizitätsmodul (E*a) des inneren Kernreiters (40u) nicht kleiner als 50 MPa und nicht größer als 85 MPa ist.

**5.** Schwerlastluftreifen (2) nach einem der Ansprüche 1 bis 4, wobei die Gesamtdicke (TM1 + TM2) des Abdeckgummis (80) nicht kleiner als 2,1 mm und nicht größer als 3,5 mm ist.

**6.** Schwerlastluftreifen (2) nach einem der Ansprüche 1 bis 5, wobei ein komplexer Elastizitätsmodul (E*g) des Abdeckgummis (80) niedriger als ein komplexer Elastizitätsmodul (E*c) des Wulstschutzbands (22) ist.

**7.** Schwerlastluftreifen (2) nach einem der Ansprüche 1 bis 6, wobei der komplexe Elastizitätsmodul (E*g) des Abdeckgummis (80) nicht kleiner als 2 MPa und nicht größer als 8 MPa ist.

**Revendications**

**1.** Bandage (2) pneumatique pour service intensif comprenant :

une paire de talons (8) incluant chacun une âme (38) et un sommet (40) situé à l'extérieur de l'âme (38) dans une direction radiale ;
une carcasse (10) s'étendant sur et entre un talon (8) et l'autre talon (8) ;
une paire de bandelettes (22) de talon situées chacune à l'extérieur du talon (8) dans une direction axiale ; et
un assemblage (28) d'étiquette incluant une étiquette (78) RFID et un caoutchouc de couverture (80) recouvrant l'étiquette (78) RFID, dans lequel le sommet (40) inclut un sommet (40u) intérieur situé sur le côté âme (38) et un sommet (40s) extérieur situé à l'extérieur du sommet (40u) intérieur dans la direction radiale,
un rapport d'un module d'élasticité complexe (E*a) du sommet (40u) intérieur sur un module d'élasticité complexe (E*b) du sommet extérieur (40s) n'est pas inférieur à 10 et n'est pas supérieur à 21, dans lequel ledit module d'élasticité complexe est mesuré en utilisant un spectromètre de viscoélasticité selon les standards de la norme industrielle japonaise JIS K6394, dans lesquels un mesurage d'une pièce d'essai obtenue en pressurisant et en chauffant une composition de caoutchouc pour chaque composant est utilisé, sous les conditions suivantes : contrainte initiale = 10 %, amplitude = $\pm$ 1 %, fréquence = 10 Hz, mode de déformation = traction, température de mesurage = 70 °C ;
la carcasse (10) inclut au moins une nappe (48) de carcasse,
la nappe (48) de carcasse, inclut un corps (50) de nappe s'étendant entre une âme (38) et l'autre âme (38) et une paire de portions (52) retroussées connectées chacune au corps (50) de nappe et retroussées autour de l'âme (38) depuis un côté intérieur vers un côté extérieur dans la direction axiale,
une extrémité (42) extérieure du sommet (40u) intérieur est située à l'extérieur d'une extrémité (54) de la portion (52) retroussée dans la direction radiale,
l'assemblage (28) d'étiquette est situé à l'extérieur du sommet (40s) extérieur dans la direction axiale, et
le pneumatique étant **caractérisé en ce que**
une distance (HR) dans la direction radiale depuis une ligne de base de talon (BBL) jusqu'à l'étiquette (78) RFID n'est pas inférieure à 120 % et n'est pas supérieure à 145 % d'une distance (HF) dans la direction radiale depuis la ligne de base de talon (BBL) jusqu'à l'extrémité (54) de la portion (52) retroussée,
et **en ce que**
un rapport (TR/[TM1 + TM2]) d'une épaisseur (TR) de l'étiquette (78) RFID sur une épaisseur (TM1 + TM2) totale du caoutchouc de couverture (80) n'est pas inférieur à 0,34 et n'est pas supérieur à 0,58.

**2.** Bandage (2) pneumatique pour service intensif selon la revendication 1, dans lequel l'assemblage (28) d'étiquette est située entre le sommet (40s) extérieur et la bandelette (22) de talon dans la direction axiale.

**3.** Bandage (2) pneumatique pour service intensif selon la revendication 1 ou 2, dans lequel une distance (HU) dans la direction radiale depuis la ligne de base de talon (BBL) jusqu'à l'extrémité (42) extérieure du sommet (40u) intérieur n'est pas inférieure à 110 % et n'est pas supérieure à 180 % de la distance (HF) dans la direction radiale du pneumatique depuis la ligne de base de talon (BBL) jusqu'à l'extrémité (54) de la portion (52) retroussée.

**4.** Bandage (2) pneumatique pour service intensif selon l'une quelconque des revendications 1 à 3, dans lequel le module d'élasticité complexe (E*a) du sommet (40u) intérieur n'est pas inférieur à 50 MPa et n'est pas supérieur à 85 MPa.

5. Bandage (2) pneumatique pour service intensif selon l'une quelconque des revendications 1 à 4, dans lequel l'épaisseur (TM1 + TM2) totale du caoutchouc de couverture (80) n'est pas inférieure à 2,1 mm et n'est pas supérieure à 3,5 mm.

6. Bandage (2) pneumatique pour service intensif selon l'une quelconque des revendications 1 à 5, dans lequel un module d'élasticité complexe (E*g) du caoutchouc de couverture (80) est inférieur à un module d'élasticité complexe (E*c) de la bandelette (22) de talon.

7. Bandage (2) pneumatique pour service intensif selon l'une quelconque des revendications 1 à 6, dans lequel le module d'élasticité complexe (E*g) du caoutchouc de couverture (80) n'est pas inférieur à 2 MPa et n'est pas supérieur à 5 MPa.

# FIG. 1

# FIG. 2

FIG. 3

inner surface side
of tire

outer surface side
of tire

**EP 4 212 364 B1**

**REFERENCES CITED IN THE DESCRIPTION**

**Patent documents cited in the description**

- JP 2015223918 A
- JP 2021046057 A
- KR 101059589 B1
- US 2016303921 A1
- JP 2016049920 A
- WO 2021166798 A1
- EP 3756870 A1
- WO 2021039603 A1